# EUROPEAN PATENT APPLICATION

(11) **EP 4 102 853 A1**
(43) Date of publication of application: **14.12.2022**
(21) Application number: 20917375.6
(22) Date of filing: 12.11.2020
(51) Int. Cl.: H04Q 9/00, G05B 19/418

(54) **INFORMATION PROCESSING DEVICE AND INFORMATION PROCESSING METHOD**

(30) Priority: 03.02.2020 JP 2020016391
(71) Applicant: DMG Mori Co., Ltd., Yamatokoriyama-shi, Nara 639-1160 (JP)
(72) Inventor: TAKAHASHI Masafumi, Sapporo City, Hokkaido 004-0015 (JP); OTA Tomomi, Sapporo City, Hokkaido 004-0015 (JP)
(74) Representative: Keltie LLP
(86) International application number: PCT/JP2020/042253
(87) International publication number: WO 2021/157154

(57) **Abstract**

Disclosed is an information processing device including: a first communication unit configured to permit communication with a remote maintenance device that remotely operates machine tools; a second communication unit configured to permit communication with the machine tools; an operation unit including a remote maintenance switch; and a control unit configured to, according to whether the remote maintenance switch is in an ON state or an OFF state, determine whether or not to permit communication for remotely operating the machine tools by the remote maintenance device, and control connection and disconnection between the remote maintenance device and the machine tools. Accordingly, it is possible to perform remote maintenance on machine tools while maintaining the confidentiality of information indicating the operation state of the machine tools.

## Description

### [Technical Field]

The present invention relates to an information processing device and an information processing method.

### [Background Art]

In the above-described technical field, PTL 1 discloses a technique by which, according to the monitoring item selected at a mobile terminal that executes a remote monitoring application, a display screen of a numerical control device that controls a machine tool is displayed on the mobile terminal.

### [Citation List]

### [Patent Literature]

[PTL 1] Japanese Laid-Open Patent Publication No. 2018-195153

### [Summary of Invention]

### [Technical Problem]

However, according to the technique disclosed in the above document, the operation state of the machine tool can be freely acquired from the mobile terminal including the remote monitoring application, and the confidentiality of the information indicating the operation state of the machine tool cannot be maintained.

### [Solution to Problem]

Therefore, the present invention provides an information processing device and so forth recited in the claims.

### [Advantageous Effects of Invention]

According to the present invention, it is possible to perform remote maintenance on a machine tool while maintaining the confidentiality of information of the machine tool.

### [Brief Description of Drawings]

[FIG. 1] FIG. 1 is a block diagram showing a configuration of an information processing device according to a first embodiment.
[FIG. 2] FIG. 2 is a diagram showing an operation outline of a remote maintenance system including a gateway according to a second embodiment.
[FIG. 3] FIG. 3 is a block diagram showing a configuration of the remote maintenance system including the gateway according to the second embodiment.
[FIG. 4A] FIG. 4A is a diagram showing a configuration of the gateway according to the second embodiment.
[FIG. 4B] FIG. 4B is a block diagram showing a functional configuration of the gateway according to the second embodiment.
[FIG. 4C] FIG. 4C is a diagram showing a configuration of a hardware installation unit according to the second embodiment.
[FIG. 5] FIG. 5 is a block diagram showing a functional configuration of a control unit according to the second embodiment.
[FIG. 6] FIG. 6 is a flowchart illustrating a processing procedure performed by the control unit according to the second embodiment.
[FIG. 7] FIG. 7 is a diagram showing an operation outline of a remote maintenance system including a gateway according to a third embodiment.
[FIG. 8] FIG. 8 is a diagram showing an operation outline of a remote maintenance system including a gateway according to a fourth embodiment.
[FIG. 9] FIG. 9 is a flowchart illustrating a processing procedure relating to a remote maintenance switch performed by a control unit according to the fourth embodiment.
[FIG. 10] FIG. 10 is a diagram showing an operation outline of a remote maintenance system including a gateway according to a fifth embodiment.

### [Description of Embodiments]

Hereinafter, embodiments of the present invention will be illustratively described in detail with reference to the drawings. However, constituent elements described in the following embodiments are merely illustrative, and the technical scope of the present invention is not intended to be limited thereto.

In the following embodiments, "remote maintenance" is not limited to processing for remote maintenance of a machine tool using a remote maintenance device, and includes remote operation on the machine tool from a terminal of a maintenance operator. The "remote maintenance" is performed via a private network formed by a closed network or a VPN (Virtual Private Network) while information confidentiality is maintained. Note that a closed network refers to a network within the range of a telecommunication carrier, and is separated from the Internet. A "private network" is a network in which user terminals are connected to each other while being closed to the outside, and includes a network using a physical dedicated circuit, and a network using a virtual dedicated circuit that is set on the open Internet or the like using tunneling technology, encryption technology, authentication technology, or the like. An "edge network", in general, indicates a terminal region close to the user of a communication network. For example, an edge network indicates a user's corporate network such as a corporate LAN (Local Area Network) or WAN (Wide Area Network) to which a corporate device used by the user is connected. However, the "edge network" according to the present embodiment is a network that is separate from a "machine tool network" to which (a) a machine tool, (b) a machine of a different kind such as a cutting machine, an additive manufacturing machine, and a composite machining machine, (c) another company's device, or (d) another peripheral device such as a transport robot is connected.

### [First Embodiment]

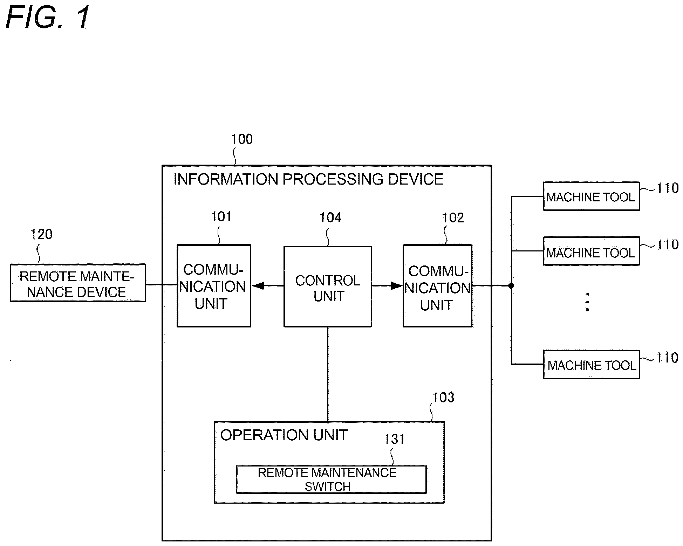

An information processing device 100 according to a first embodiment will be described with reference to FIG. 1. The information processing device 100 is a device for enabling remote access to machine tools.

As shown in FIG. 1, the information processing device 100 includes communication units 101 and 102, an operation unit 103, and a control unit 104. The communication unit 101 permits communication with a remote maintenance device 120 that remotely operates machine tools 110. The communication unit 102 permits communication with the machine tools 110. The operation unit 103 includes a remote maintenance switch 131. The control unit 104 determines, according to whether the remote maintenance switch 131 is in an ON state or an OFF state, whether or not to permit communication for remotely operating the machine tools 110 using the remote maintenance device 120, and controls connection and disconnection between the remote maintenance device 120 and the machine tools 110.

According to the present embodiment, a communication function for operating the machine tools from a remote place can be switched between ON and OFF using the remote maintenance switch. Accordingly, it is possible to perform remote maintenance on the machine tools while maintaining the confidentiality of information of the machine tools.

### [Second Embodiment]

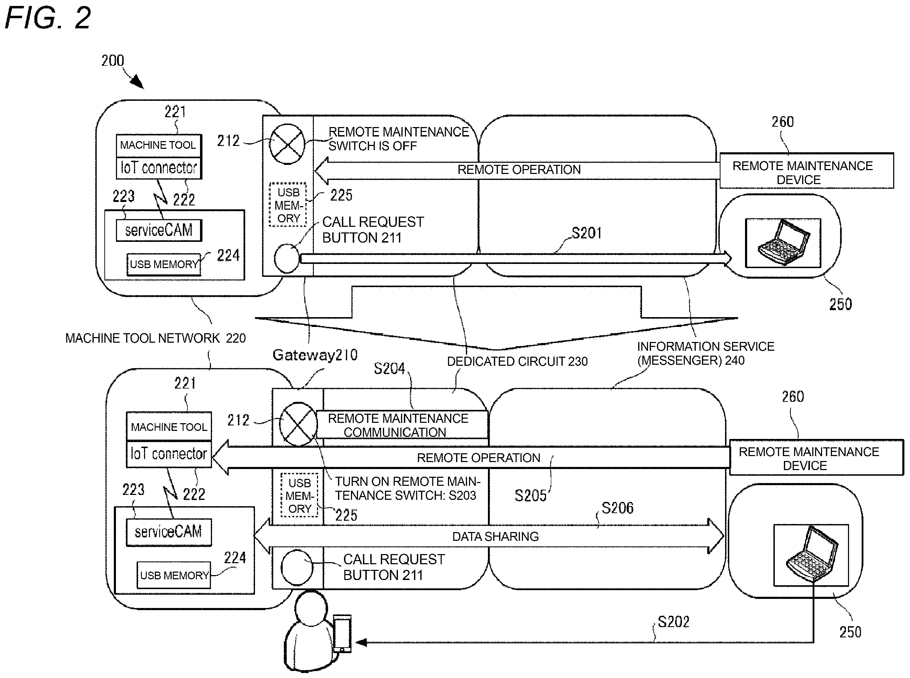

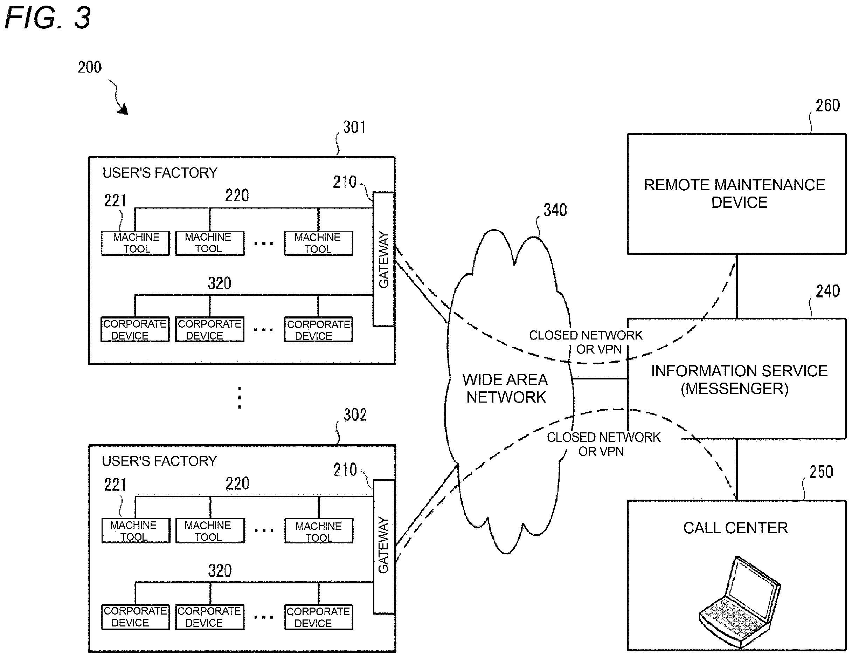

Next, a remote maintenance system 200 including a gateway 210 serving as an information processing device according to a second embodiment of the present invention will be described with reference to FIGS. 2 and 3.

### (Operation outline)

FIG. 2 is a diagram showing an operation outline of the remote maintenance system 200. The remote maintenance system 200 includes a gateway 210 serving as an information processing device, a machine tool network 220 of the user's factory, a dedicated circuit 230 of a private network, an information service (messenger) 240, a call center 250, and a remote maintenance device 260. At present, a dedicated mobile circuit that has been set up domestically for Japan can be used as the dedicated circuit 230. However, in the future, the mobile circuit will become usable worldwide because terminals will be globally standardized when the 5G is deployed. For example, at present, a terminal that performs communication is connected to a mobile phone communication network that does not go out to the Internet, and the terminal is directly connected to the gateway 210 using a dedicated circuit via the mobile phone communication network. In this manner, a closed network that never goes out to the Internet can be provided using a mobile circuit.

The user may consider that a problem may be occurring in a machine tool 221 connected to the machine tool network 220. In that case, the user turns ON a call request button 211 of the gateway 210. In step S201, the gateway 210 transmits a call back request mail to the call center 250. At this time, when the remote maintenance switch is OFF in FIG. 2, remote operation from the remote maintenance device 260 cannot be performed.

In step S202, an operator at the call center 250 calls back the user. From a conversation with the user, the operator determines whether or not remote operation needs to be performed on a machine tool in which a problem may be occurring. If it is determined that remote operation needs to be performed, the operator requests the user to turn ON a remote maintenance switch 212 serving as a physical key installed in the gateway 210. If the user permits remote operation on the machine tool, the user turns ON the remote maintenance switch 212. However, if the user does not permit remote operation on the machine tool, the user may maintain the OFF state. In this manner, through determination and switch operation performed by the user, the security of remote operation on the machine tool can be maintained.

When the user turns ON the remote maintenance switch 212 in step S203, remote maintenance communication via the dedicated circuit 230 is enabled in step S204. In step S205, from an operator or an engineer at the call center 250, remote operation on the machine tool 221 is performed via the gateway 210 using remote maintenance communication. At the same time, in step S206, sharing of information of the machine tools connected within the machine tool network is enabled via the gateway 210 using remote maintenance communication. In addition, sharing of (a) information of a USB memory 225 connected to the gateway 210, (b) information of a USB memory 224 connected within the machine tool network (e.g., information of a USB memory inserted into a control board of the machine tool), (c) video information of a service CAM 223 connected via an IoT connector 222, and so forth can also be enabled.

In this manner, the USB memories 224 and 225 can be used for data sharing (log collection, MAPPS and PLC updates). The gateway 210 has the function of keeping a network log, and can realize monitoring of the network stability.

Before performing remote operation on each machine tool 221, whether or not communication is enabled is checked first. If communication is enabled, remote operation is started. The reason for this is to distinguish between the locations of problems, specifically, whether the problem is located in communication or the machine tool. That is, a Ping is first sent to check the network condition, and the screen of the machine tool is shared. Then, the state of the machine tool that is considered to be problematic by the user is identified. Since the user is on the telephone line with the operator or the engineer, remote operation is performed according to the content of the telephone conversation. If the cause is found, a countermeasure thereagainst is also taken. Furthermore, setting change, software update, and log acquisition can also be performed.

In FIG. 2, a call message is transmitted from the gateway 210 to the call center 250. However, a call message may be transmitted from each machine tool to the call center 250. Alternatively, the user may convey a call message to the call center 250 by telephone. Furthermore, the driving state of the machine tool and an alarm code may be included in the call message, thus transmitting a larger amount of information. Transmitting a large amount of information enables remote operation to be performed smoothly.

### (System configuration)

FIG. 3 is a block diagram showing a configuration of the remote maintenance system 200 including the gateway 210.

The remote maintenance system 200 includes a plurality of factories owned by the user, namely, a first factory 301 and a second factory 302, an information service (e.g., a messenger) 240, and a call center 250 and a remote maintenance device 260 connected via the information service 240, all of which are connected via a network 340.

The first factory 301 and the second factory 302 each include a machine tool network (machine tool LAN) 220 and a user's corporate network (edge network: corporate LAN and WAN)320 that are connected to networks via the corresponding gateway 210. A plurality of machine tools 221 are connected to each of the machine tool networks 220. A plurality of corporate devices are connected to each of the user's corporate networks 320.

Each gateway 210 communicates with the information service 240, the call center 250, and the remote maintenance device 260 via a private network such as a closed network or a VPN. In particular, it is preferable to use VPN for connection to overseas. The plurality of machine tools 221 that are connected to the machine tool network 220 are not limited to machine tools of the same kind, and may be a combination of different machines such as a cutting machine, an additive manufacturing machine, and a composite machining machine. They may also be other peripheral devices such as another company's device and a transport robot, or other electronic devices.

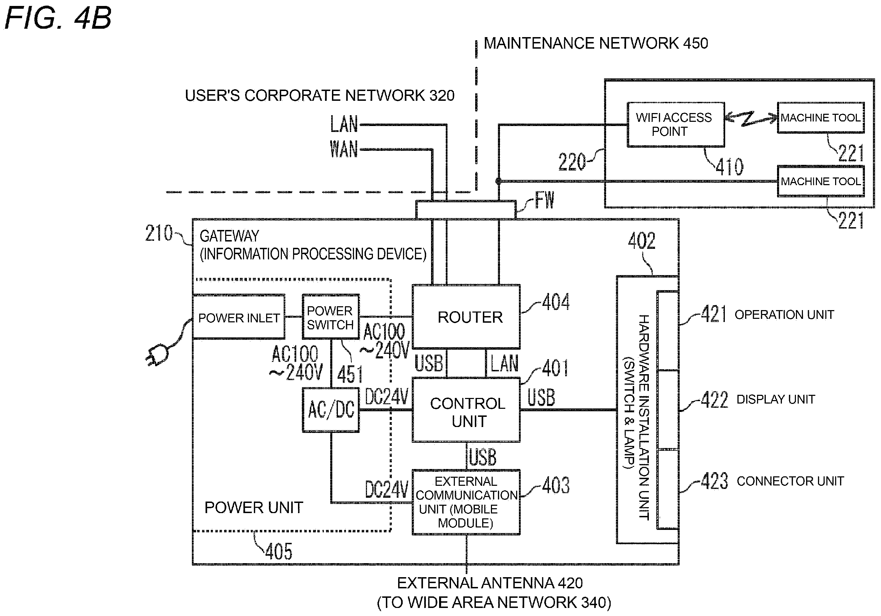

As shown in FIG. 4B, the gateway 210 may be provided with an external firewall FW. The external firewall FW has the function of permitting or prohibiting access to the information service 240 by the user for each machine tool 221. Settings relating to the function of the external firewall FW may be changed from a corporate device (e.g., a central management system) within the user's corporate network 320.

Assuming that a first user and a second user, a first machine tool 221 and a second machine tool 221, and a first information service 240 and a second information service 240 exist, the aforementioned function will be described focusing on these components. For example, the external firewall FW may permit access to each information service 240 by each user only in cases where the first user uses the first machine tool 221 to access the first information service 240, where the second user uses the first machine tool 221 to access the second information service 240, and where the second user uses the second machine tool 221 to access the first information service 240, whereas the external firewall FW may otherwise prohibit access to each information service 240 by each user.

The numbers of users, machine tools 221, and information services 240, and the combinations thereof, as well as the association of prohibition and permission with the combination may be changed freely. That is, the external firewall FW may have the function of permitting or prohibiting, based on the combination of a user and a machine tool 221 used by the user, access to the information service 240 by that user.

Here, each user may have an individual access key (e.g., a USB key). By applying the access key to a machine tool 221, a combination of each user and the machine tool 221 can be determined. Access to each information service 240 may be permitted or prohibited by the external firewall FW according to the access level set for the combination.

The gateway 210 may have the above-described function of the external firewall FW. In this case, the external firewall FW does not need to be installed.

Here, main functions of the information service 240 will be described. The information service 240 has the function of conveying, to each user, various types of information relating to each machine tool, in response to a request from the user. Examples of such information include history information of operating ratios of each machine tool, history information of the number of machined workpieces, history information of alarms, and history information of cycle times. The information service 240 transmits, to each user terminal, data for displaying these pieces of history information using various graphs (e.g., a bar chart and a line graph) and tables over a period from a given start date to a given end date. A user terminal that has received such data displays the above-described graph or table on a screen thereof. By operating an operation unit 421 described below, the user can request the information service 240 to transmit various types of information relating to the machine tool. For example, the user may be able to request the information service 240 to transmit various types of information relating to the machine tool by turning ON the remote maintenance switch 212.

### <<Gateway>>

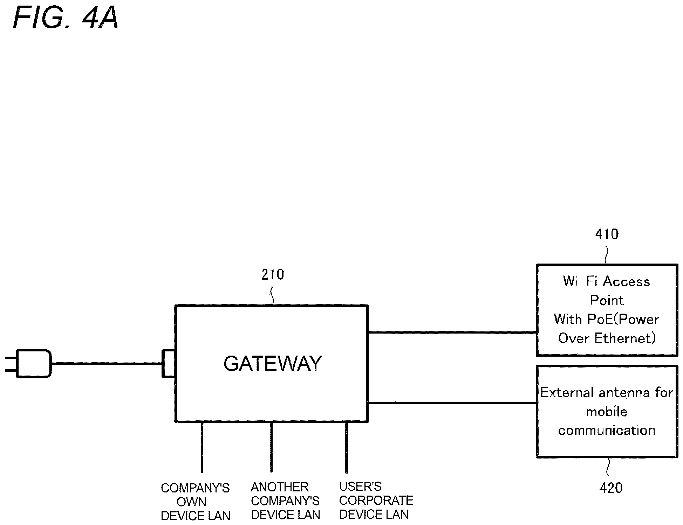

A configuration and operations of the gateway 210 according to the present embodiment will be described below with reference to FIGS. 4A to 5.

### (Configuration)

FIG. 4A is a diagram showing the configuration of the gateway 210.

The gateway 210 can be connected to a power source by connecting a WiFi AP (access point) 410 and an external antenna 420 thereto, and can be disposed anywhere if the communication environment permits. A machine tool network including a company's own device LAN and another company's device LAN, and the user's corporate network can be separably connected to the gateway 210. In particular, during remote operation by remote maintenance, a remote maintenance network including the machine tool network is disconnected from the user's corporate network, and the security thereof is maintained.

### (Functional configuration)

FIG. 4B is a block diagram showing a functional configuration of the gateway 210.

The gateway 210 includes a control unit 401, a hardware installation unit 402, an external communication unit 403 serving as a first communication unit, a router 404 serving as a second communication unit, and a power unit 405.

The control unit 401 has a function as a computer. The hardware installation unit 402 includes an operation unit 421, a display unit 422, and a connector unit 423, and is formed by switches, lamps and the like each serving as a physical key. The operation unit 421 of the hardware installation unit 402 controls access to the control unit 401 via a closed network or a VPN by turning ON/OFF the physical keys. The display unit 422 of the hardware installation unit 402 displays the state of the control unit 401 using a lamp. Via the connector unit 423 of the hardware installation unit 402, each machine tool 221 can provide data to the control unit 401 and acquires data from the control unit 401.

The external communication unit 403 has a function as a mobile module, and establishes a communication connection to an operator terminal at the call center and the remote maintenance device 260 using a private network via the external antenna 420 if the communication environment requires. The router 404 controls connection between the machine tool network (machine tool LAN) 220, the LAN and the WAN connected to the user's corporate network 320, and a private network via the external communication unit 403. Each machine tool 221 is connected to the machine tool network 220 via the WiFi access point 410 or by wired connection. In the present embodiment, the router 404 controls connection of the machine tool network 220 to the user's corporate network 320 and the external private network. Through such connection control by the router 404, the user's corporate network 320 and the maintenance network 450, including the machine tool network 220 and the external private network, can be separated from each other. In the router 404, communication may be analyzed to perform a virus check.

The power unit 405 is connected/disconnected using a power switch 451, outputs general power (AC 100 V to 240 V), and supplies predetermined power to each of the constituent units of the gateway 210. Accordingly, the gateway 210 can be disposed at any location to which general power can be supplied. That is, the gateway 210 can be disposed at a location that is distant from the machine tool and at which the gateway 210 can be easily operated by the user.

Note that connections between the functional constituent units in the gateway 210 is not limited to those using "USB" and "LAN". Mainly, each connection indicated by "USB" represents transmission of control information using serial communication, and connection indicated by "LAN" represents parallel data communication.

### (Hardware installation unit)

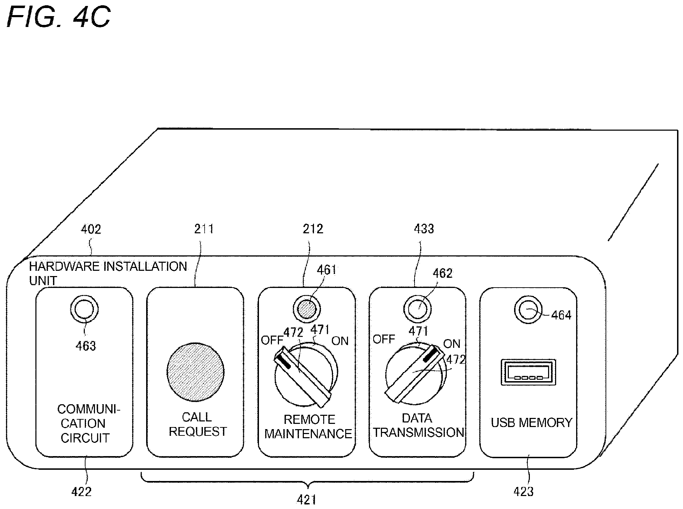

FIG. 4C is a diagram showing a configuration of the hardware installation unit 402. The hardware installation unit 402 includes an operation unit 421, a display unit 422, and a connector unit 423. The operation unit 421 includes a call request button 211, a remote maintenance switch 212, and a data transmission switch 433. The remote maintenance switch 212 and the data transmission switch 433 are physical keys, and each include a rotational body 471 and a holding part 472. A user as an operator can switch the state between an "ON" state and an "OFF" state by holding the holding part 472 and rotating the rotational body 471. After the remote maintenance switch has been switched to the "ON" state, access can be made from the outside via a dedicated circuit. Note that the data transmission switch 433 is also referenced as an operation information transmission switch. The remote maintenance switch 212 and the data transmission switch 433 respectively include lamps 461 and 462 that signal ON/OFF of the switches. In this manner, a hardware switch is assigned to each function such that the function can be controlled.

Examples of the physical keys will be specifically described. Each physical key includes a connection part that rotates together with the corresponding holding part 472 and rotational body 471, and two spaced-apart contact parts that are fixed to the hardware installation unit 402 side of the remote maintenance switch 212 or the data transmission switch 433. One of the two contact parts is connected to an output signal line. When the holding part 472 of the remote maintenance switch 212 is at the "OFF" position, the two contact parts remain spaced apart, and a signal for permitting communication with the remote maintenance device is output to the output signal line. On the other hand, when the holding part 472 of the remote maintenance switch 212 is at the "ON" position, the two contact parts are connected by the connection part, and a signal for prohibiting communication with the remote maintenance device is output to the output signal line. The data transmission switch 433 operates in the same manner. Note that the configuration of the physical key is not limited, as long as it is a key formed by a mechanical mechanism as described above.

When the call request button 211 is turned ON, a call back request mail in which customer information is described is transmitted to the call center 250, and a call back by telephone can be received from the call center 250. After the user has switched the remote maintenance switch 212 to "ON" in accordance with an instruction from the call center 250, the user can receive maintenance by remote operation. That is, turning ON the remote maintenance switch 212 enables communication between the gateway 210 and the operator terminal at the call center 250 or the remote maintenance device 260 via the external private network. The call center 250 investigates the problem and takes a countermeasure thereagainst via a network, or using a USB memory.

When the remote maintenance switch 212 is OFF, communication via the external private network is stopped. Accordingly, when the remote maintenance switch 212 is OFF, the remote maintenance device is unable to acquire a log of the plurality of machine tools. Turning ON the data transmission switch 433 enables transmission of the operation information of the machine tools from the gateway 210 to the operation information accumulation server via the external private network. When the data transmission switch 433 is OFF, transmission of the operation information of the machine tools to the operation information accumulation server is stopped. These buttons and switches are physical switches, and each have the effect of suppressing an incorrect operation.

Furthermore, even when the remote maintenance switch 212 is ON, transmission of the operation information of the machine tools to the operation information accumulation server is stopped when the data transmission switch 433 is OFF. After transmission of the operation information of the machine tools to the operation information accumulation server has been stopped, the remote maintenance device 260 is unable to acquire the operation information of the machine tools. That is, when the remote maintenance switch 212 is in the ON state and the data transmission switch 433 is in the OFF state, the remote maintenance device 260 is unable to acquire the operation information of the plurality of machine tools.

The display unit 422 is a lamp 463 that displays whether or not a communication circuit with the external communication unit 403 via the external private network has been established. The connector unit 423 is a connector for connecting the USB memory 225, and includes a lamp 464 that indicates connection/disconnection.

The lamps 461 to 464 may display the states using colors such as blue and red, or may display the states by illuminating or not illuminating. In addition, an indicator that indicates whether or not a connection has been established to the corporate LAN may be provided.

### (Control unit)

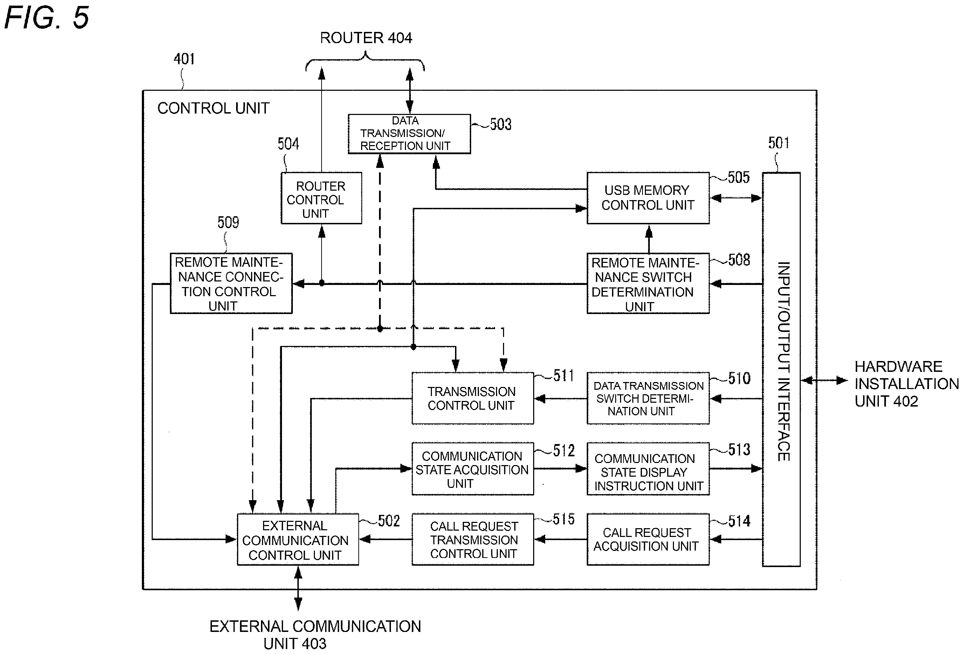

FIG. 5 is a block diagram showing a functional configuration of the control unit 401. In FIG. 5, versatile computer functions of the control unit 401 have been omitted.

The control unit 401 includes an input/output interface 501, an external communication control unit 502, a data transmission/reception unit 503, and a router control unit 504. The input/output interface 501 is an interface between the control unit 401 and the hardware installation unit 402. The external communication control unit 502 controls the external communication unit 403 to perform communication via the external private network. The data transmission/reception unit 503 transmits and receives data to and from the router 404. The router control unit 504 performs routing control including disconnection of the communication route of the router 404.

The control unit 401 further includes a USB memory control unit 505. In the USB memory control unit 505, writing to the USB memory is used for transferring digital data to the user from an operator or a sales representative at the call center. In the USB memory control unit 505, reading from the USB memory is used for transmitting, to the remote maintenance device, the data acquired by the user.

The control unit 401 further includes a remote maintenance switch determination unit 508 and a remote maintenance connection control unit 509. The remote maintenance switch determination unit 508 determines whether the remote maintenance switch 212 of the hardware installation unit 402 is ON or OFF. Then, upon receiving the result of detection by the remote maintenance switch determination unit 508, when the remote maintenance switch 212 is ON, the remote maintenance connection control unit 509 permits the external communication control unit 502 to perform communication via the external private network. On the other hand, when the remote maintenance switch 212 is OFF, the remote maintenance connection control unit 509 stops the permission for the external communication control unit 502 to perform communication via the external private network.

The control unit 401 further includes a data transmission switch determination unit 510 and a transmission control unit 511. The data transmission switch determination unit 510 determines whether the data transmission switch 433 of the hardware installation unit 402 is ON or OFF. Then, upon receiving the result of determination by the data transmission switch determination unit 510, when the data transmission switch 433 is ON, the transmission control unit 511 permits the external communication control unit 502 to perform data transmission via the external private network. The exchange of data via the USB memory is permitted or prohibited in conjunction with the remote maintenance switch, rather than the data transmission switch.

The control unit 401 further includes a communication state acquisition unit 512 and a communication state display instruction unit 513. The communication state acquisition unit 512 acquires a communication state between the external communication unit 403 and the external private network via the external communication control unit 502. Then, the communication state display instruction unit 513 displays, on the display unit 422 of the hardware installation unit 402, the communication state acquired by the communication state acquisition unit 512. That is, whether or not communication has been established is displayed using the lamp 463 of the display unit 422 to notify the user thereof.

The control unit 401 further includes a call request acquisition unit 514 and a call request transmission control unit 515. The call request acquisition unit 514 determines whether the call request button 211 of the hardware installation unit 402 is ON or OFF. Then, upon receiving, from the call request acquisition unit 514, a result of determination indicating that the call request button 211 is ON, the call request transmission control unit 515 transmits a call message to the call center 250.

When data transmission/reception between the external private network and the machine tool network is performed without using a USB memory in FIG. 5, the USB memory control unit 505, a data storage control unit 506, and a data read control unit 507 are omitted, and the data transmission/reception unit 503 and the transmission control unit 511 are directly connected to each other.

### <<Processing procedure of control unit>>

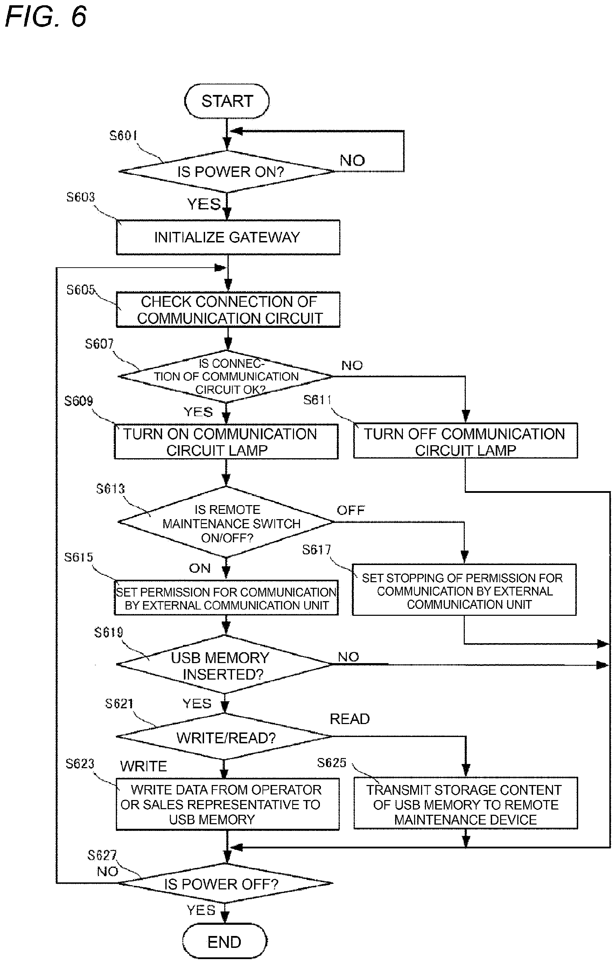

Processing procedure relating to the hardware installation unit 402 performed by the control unit 401 will be described below with reference to FIG. 6. The processing is executed by a CPU of the control unit 401 using a RAM, and realizes the functional configuration shown in FIG. 5. In FIG. 6, processing procedure relating to the call request button has been omitted. In FIG. 6, the order of the processing may be reversed.

In the procedure relating to the call request button, the control unit 401 determines whether the call request button 211 serving as a physical key is ON or OFF. When the call request button 211 is ON, the control unit 401 transmits a call back request message to the terminal at the call center 250.

In step S601 in FIG. 6, the control unit 401 waits until the power is turned ON. After the power has been turned ON, in step S603, the control unit 401 initializes the gateway 210. Then, in step S605, the control unit 401 checks whether or not the connection of the communication circuit is normal. Depending on the checking result, the procedure branches from step S607. When the connection of the communication circuit is normal, in step S609, the control unit 401 turns ON the lamp 463 serving as a communication circuit indicator. On the other hand, when the connection of the communication circuit is not normal, in step S611, the control unit 401 turns OFF the lamp 463 serving as a communication circuit indicator, thus prompting the user to check the communication environment.

Next, in step S613, the control unit 401 determines whether the remote maintenance switch 212 serving as a physical key is set "ON" or "OFF". When the remote maintenance switch 212 is ON, in step S615, the control unit 401 sets permission for communication with the external private network by the external communication unit 403. On the other hand, when the remote maintenance switch 212 is OFF, in step S617, the control unit 401 sets stopping of permission for communication with the external private network by the external communication unit 403.

Next, in step S619, the control unit 401 determines whether the USB memory 225 has been inserted. If the USB memory 225 has been inserted, in step S621, the control unit 401 determines whether the processing to be performed is write processing or read processing. When the processing is write processing to the USB memory 225, in step S623, the control unit 401 writes the data from an operator or a sales representative to the USB memory 225. On the other hand, when the processing is read processing from the USB memory 225, in step S625, the control unit 401 transmits the storage content of the USB memory 225 to the remote maintenance device 260.

In step S627, the control unit 401 determines whether or not the power is OFF, and, if the power is not OFF, repeats the processing from step S605 onward.

According to the present embodiment, ON and OFF of the function of remotely operating the machine tools is switched using the remote maintenance switch. Accordingly, it is possible to perform remote maintenance on machine tools while maintaining the confidentiality of information indicating the operation state of the machine tools.

According to the present embodiment, the following effects can be additionally achieved.
(1) The entire factory can be easily connected to networks. The operation information can be easily acquired. Problems can be solved without a service technician having to visit the factory, and it is thus possible to reduce the necessity for on-site services.
(2) Security can be increased. It is possible to provide separation between devices, and between a machine tool and a user's corporate network, and prevent intervention from both sides. Both sides can block communications other than predetermined communications from each other. The user can be notified of a communication error.
(3) The state of each network can be constantly monitored. Remote support can be enabled only when the remote maintenance switch is ON.

That is, by ensuring isolation between the Internet and a remote maintenance network including a machine tool network, the user's facility can be connected to an information service easily, reliably, and securely. This enables prompt repair and recovery actions. Since the operation of the factory facilities can be easily monitored without the need to use a server or to install a network, the time and efforts, as well as costs are saved. In addition, support can be provided for the entire factory, and also for other devices such as another company's device, a peripheral device, and an electronic device. Further, the operation can be monitored from anywhere. Since external communication is turned ON/OFF using the remote maintenance switch, it is possible to increase the user's sense of security.

### [Third Embodiment]

Next, a remote maintenance system 700 including a gateway 210 according to a third embodiment of the present invention will be described. The remote maintenance system 700 according to the present embodiment differs from the second embodiment in that external transmission of the operation information of the machine tools is controlled using the data transmission switch installed in the gateway. The rest of the configuration and operations are the same as those in the second embodiment, and therefore the same components and operations are denoted by the same reference numerals, and the detailed descriptions thereof have been omitted.

### «Operation outline of remote maintenance system»

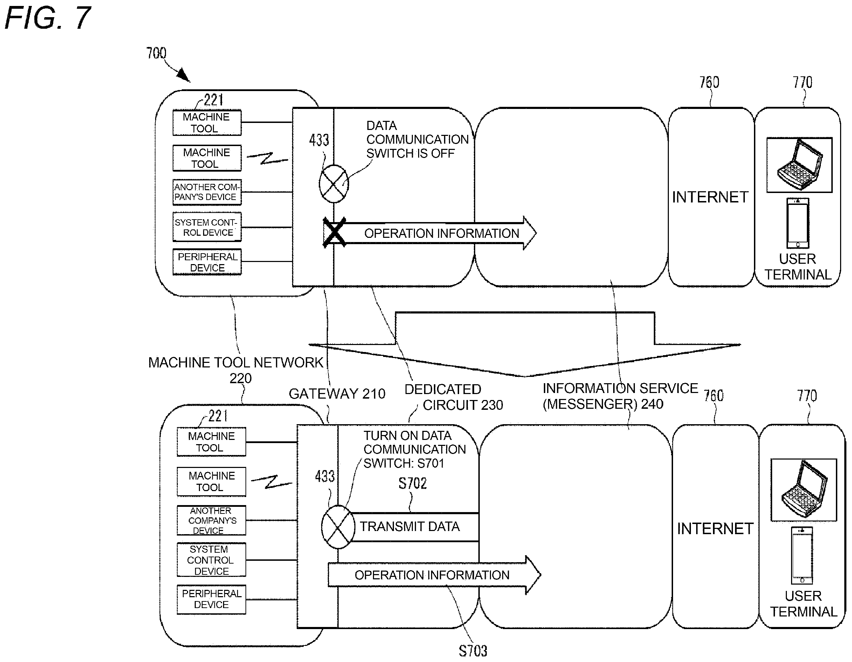

FIG. 7 is a diagram showing an operation outline of the remote maintenance system 700 including the gateway 210. In FIG. 7, the same constituent elements as those shown in FIG. 2 are denoted by the same reference numerals, and redundant descriptions have been omitted.

As shown in FIG. 7, when the data transmission switch 433 serving as a physical key installed in the gateway 210 is OFF, the operation information of the machine tools 221 and the like will not be transmitted to the outside from the gateway 210 via the dedicated circuit 230. Here, in step S701, when the data transmission switch 433 serving as a physical key installed in the gateway 210 is set ON, the gateway 210 establishes a data transmission connection via the external private network. Then, in step S703, via the gateway 210 and the private network, the operation information of the machine tools 221 connected to the machine tool network 220 is transmitted to the outside via the information service 240 while the confidentiality thereof is maintained. The operation information of the machine tools 221 is accumulated in the operation information accumulation server (not shown) via the information service 240. Furthermore, the accumulated operation information of the machine tools 221 or a result of analyzing the operation information is provided to a user terminal 770 via the Internet 760.

### (Data transmission switch)

Next, a processing procedure relating to the data transmission switch 433 performed by the control unit 401 will be described. This processing is executed by the CPU of the control unit 401 using a RAM, and realizes the functional configuration shown in FIG. 5.

The control unit 401 determines whether the data transmission switch 433 serving as a physical key is ON or OFF. When the data transmission switch 433 is ON, the control unit 401 makes a setting so as to permit data transmission by the external communication unit 403. On the other hand, when the data transmission switch 433 is OFF, the control unit 401 makes a setting so as to stop the permission of data transmission by the external communication unit 403.

According to the present embodiment, in addition to the effects of the above embodiments, it is possible to provide separation between the machine tool network and the user's corporate network, and prevent intervention from both sides. That is, it is possible to block any communication other than communication for remote maintenance, thus increasing the security.

### [Fourth Embodiment]

Next, a remote maintenance system 800 including a gateway 210 according to a fourth embodiment of the present invention will be described. The present embodiment differs from the second and third embodiments in that, when the remote maintenance switch is ON, the gateway 210 separates the user's corporate network from a maintenance network including the machine tool network. The rest of the components and operations are the same as those in the second embodiment or the third embodiment, and therefore the same components and operations are denoted by the same reference numerals, and the detailed descriptions thereof have been omitted.

### <<Operation outline of remote maintenance system>>

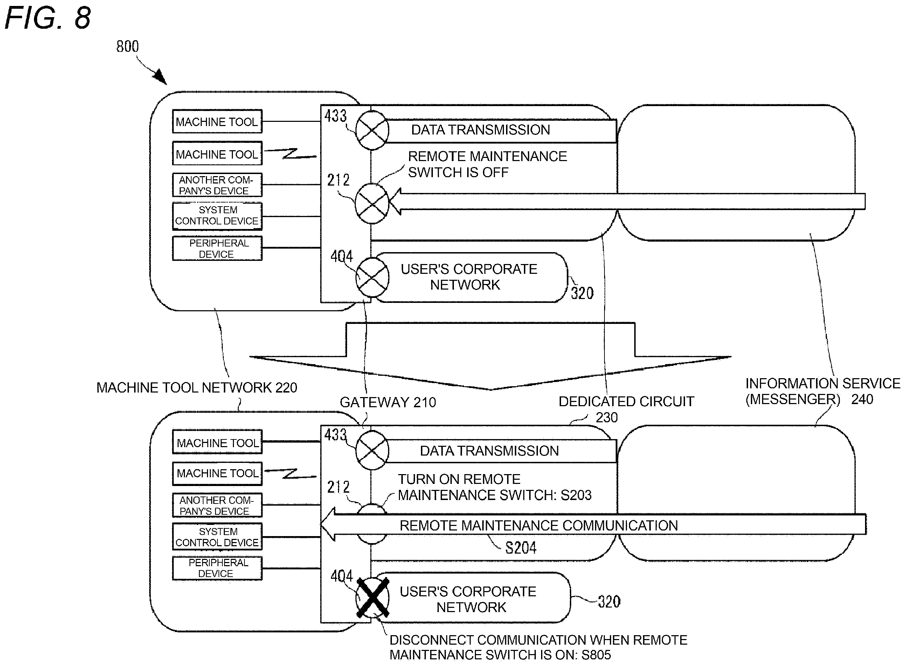

FIG. 8 is a diagram showing an operation outline of the remote maintenance system 800 including the gateway 210. In FIG. 8, the same constituent elements and steps as those shown in FIGS. 2 and 7 are denoted by the same reference numerals and step numbers, and redundant descriptions have been omitted.

In FIG. 8, when the remote maintenance switch 212 serving as a physical key installed in the gateway 210 is OFF, the user's corporate network 320 is able to communicate with the machine tool network 220 via the router 404. However, when the remote maintenance switch 212 serving as a physical key installed in the gateway 210 is turned ON in step S203, in step S204, the gateway 210 establishes remote maintenance communication via the private network. At the same time, in step S805, the gateway 210 disconnects communication with the user's corporate network 320 using the router 404.

### (Processing procedure relating to remote maintenance switch)

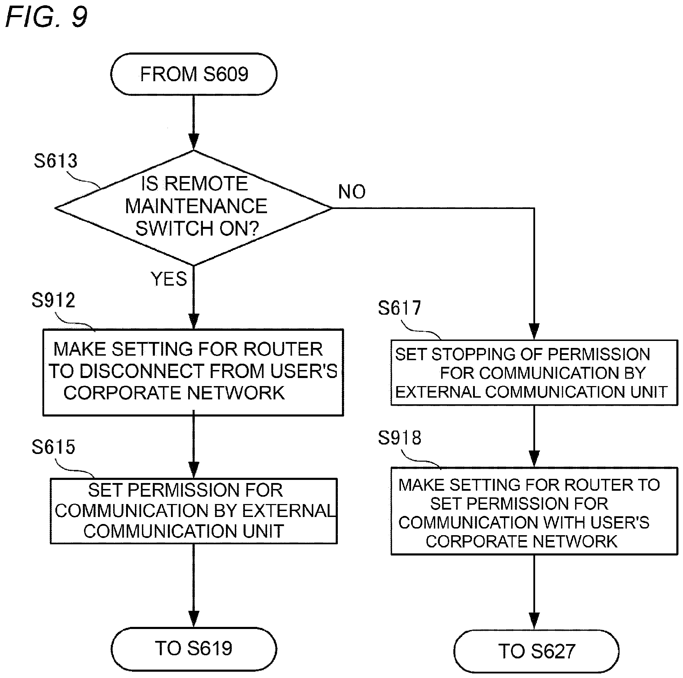

FIG. 9 is a flowchart illustrating a processing procedure relating to the remote maintenance switch 212 performed by the control unit 401. The flowchart is executed by the CPU of the control unit 401 using a RAM, and realizes the functional configuration shown in FIG. 5. In FIG. 9, the same steps as those shown in FIG. 6 are denoted by the same step numbers, and redundant descriptions have been omitted.

When the remote maintenance switch 212 is ON, in step S912, the control unit 401 makes a setting for the router 404 to disconnect from the user's corporate network 320, thus separating the maintenance network 450 from the user's corporate network 320. Then, the control unit 401 sets permission for communication with the external private network by the external communication unit 403.

On the other hand, when the remote maintenance switch 212 is OFF, the control unit 401 sets stopping of permission for communication with the external private network by the external communication unit 403. Furthermore, in step S918, the control unit 401 makes a setting for the router 404 to set permission for communication with the user's corporate network 320, thus cancelling the separation of the maintenance network 450 from the user's corporate network 320.

According to the present embodiment, in addition to the effects of the above embodiments, it is possible to maintain the confidentiality of the operation information of the machine tools when the user does not wish to make the operation information publicly available. Accordingly, it is possible to increase the user's sense of security.

### [Fifth Embodiment]

Next, a remote maintenance system 1000 including a gateway 1010 according to a fifth embodiment of the present invention will be described. The remote maintenance system 1000 differs from the second to fourth embodiments in that the gateway 1010 is connected using a VPN circuit 1030 that is virtually constructed using an Internet circuit 1003. The rest of the components and operations are the same as those in the second to fourth embodiments, and therefore the same components and operations are denoted by the same reference numerals, and the detailed descriptions thereof have been omitted.

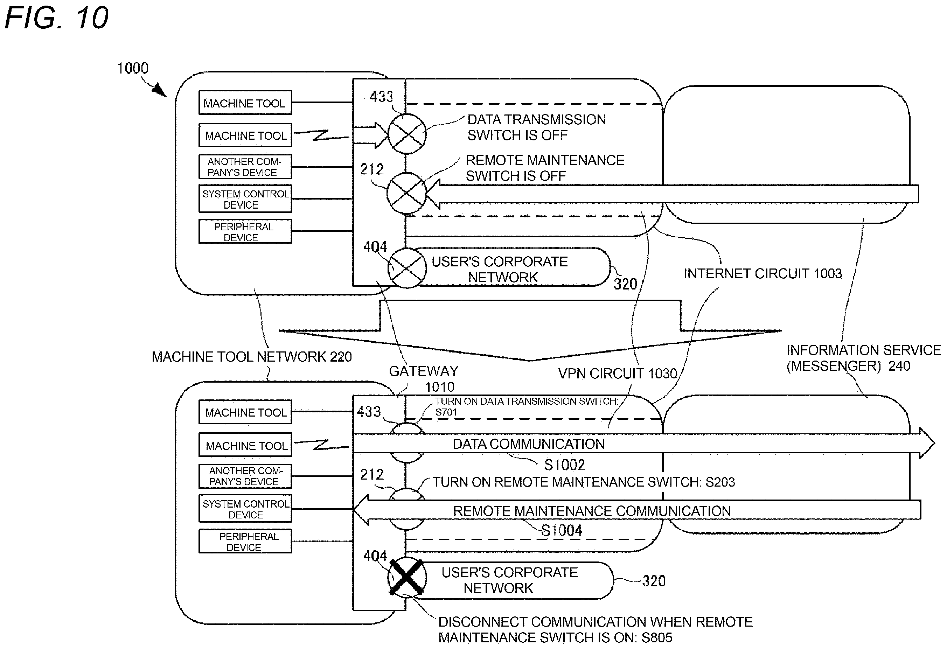

FIG. 10 is a diagram showing an operation outline of the remote maintenance system 1000 including the gateway 1010 according to the present embodiment. In FIG. 10, the same constituent elements and steps as those shown in FIGS. 2, 7 and 8 are denoted by the same reference numerals and step numbers, and redundant descriptions have been omitted.

In FIG. 10, the dedicated circuit 230 shown in FIG. 8 is replaced by a VPN circuit 1030 that is set within the Internet circuit 1003, using tunneling technology, encryption technology, authentication technology, or the like. The VPN circuit 1030 is shown between the dashed lines. The gateway 210 that controls connection to an external device such as the remote maintenance device 260 via the dedicated circuit 230 is replaced by a gateway 1010 that controls connection to an external device such as the remote maintenance device 260 via the VPN circuit 1030.

In the gateway 1010, for example, the external communication unit 403 and the control unit 401 in the configuration of the gateway 210 shown in FIG. 4B hold in advance a communication protocol for setting the VPN circuit 1030 in connecting to the external device. Therefore, if a setting that is not a setting for the VPN circuit 1030 is made, the gateway 1010 does not accept a connection to the external device.

In step S203, when the user turns ON the remote maintenance switch 212, in step S1004, remote maintenance communication via the VPN circuit 1030 is enabled. Then, remote operation on the machine tools 221 is performed from an operator or an engineer at the call center 250 via the gateway 210 using remote maintenance communication. At the same time, sharing of the information of the machine tools connected within the machine tool network is enabled via the gateway 1010 using remote maintenance communication.

In step S701, when the data transmission switch 433 serving as a physical key installed in the gateway 1010 is set ON, the gateway 1010 establishes a data transmission connection via the VPN circuit 1030. Then, via the gateway 1010 and the VPN circuit 1030, the operation information of the machine tools 221 connected to the machine tool network 220 is transmitted to the outside via the information service 240 while the confidentiality thereof is maintained.

According to the present embodiment, separation between the maintenance network and the user's corporate network (edge network) can be provided more easily. That is, a VPN using a general mobile circuit can be connected to a mobile circuit even overseas using a tethered connection, so that the edge network can be isolated from the Internet using VPN although a general mobile circuit is used. A VPN using the user's internet can provide support also for areas in which a mobile circuit is not usable, so that the edge network can be isolated from the Internet using the VPN although an Internet circuit is used.

### [Other Embodiments]

As described in the first to fifth embodiments above, it is possible to construct a secure service with a configuration according to the communication environment, and ensure isolation between the Internet and the edge network using any connection method.

Although the call request button, the remote maintenance switch, and the data transmission switch in the above embodiments are each formed by a physical key, they may each be formed by a software key selected from a touch panel. However, physical keys are desirable in order to prevent intrusion from the outside.

Although the present invention has been described with reference to the embodiments, the invention is not limited to the above-described embodiments. Various modifications that can be understood by a person skilled in the art may be made to the configuration and the details of the present invention within the technical scope of the present invention. A system or a device in which separate features included in each of the embodiments are combined in any way also falls within the technical scope of the present invention.

The present invention may be applied to a system composed of a plurality of devices, or may be applied to a stand-alone device. Furthermore, the present invention is also applicable to a case where an information processing program that implements the functions of the embodiments is supplied to a system or a device, and is executed by a processor built therein. Accordingly, a program that is installed in a computer in order to implement the functions of the present invention in the computer, or a medium in which the program is stored, as well as a WWW (World Wide Web) server to which the program is downloaded, and a processor that executes the program also fall within the technical scope of the present invention. In particular, at least, a non-transitory computer readable medium storing a program for causing a computer to execute processing steps included in the above-described embodiments also falls within the technical scope of the present invention.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. An information processing device comprising:
a first communication unit configured to permit communication with a remote maintenance device capable of remotely operating a plurality of machine tools;
a second communication unit configured to permit communication with the plurality of machine tools;
an operation unit including a remote maintenance switch; and
a control unit configured to, according to whether the remote maintenance switch is in an ON state or an OFF state, determine whether or not to permit communication for remotely operating the plurality of machine tools by the remote maintenance device, and control connection and disconnection between the remote maintenance device and the plurality of machine tools,
wherein, when the remote maintenance switch is in the OFF state, the remote maintenance device is unable to acquire a log of the plurality of machine tools.

2. An information processing device comprising:
a first communication unit configured to permit communication with a remote maintenance device capable of remotely operating a plurality of machine tools;
a second communication unit configured to permit communication with the plurality of machine tools;
an operation unit including a remote maintenance switch and a data transmission switch; and
a control unit configured to, according to whether the remote maintenance switch is in an ON state or an OFF state, determine whether or not to permit communication for remotely operating the plurality of machine tools by the remote maintenance device, and control connection and disconnection between the remote maintenance device and the plurality of machine tools,
wherein, when the remote maintenance switch is in the ON state and the data transmission switch is in an OFF state, the remote maintenance device is unable to acquire operation information of the plurality of machine tools.

3. An information processing device configured to be connected to a LAN for communicating with a plurality of machine tools and peripheral devices thereof, the information processing device comprising:
a first communication unit configured to permit communication with a remote maintenance device capable of remotely operating the plurality of machine tools and the peripheral devices thereof;
a second communication unit configured to permit communication with the machine tools via the LAN;
an operation unit including a remote maintenance switch; and
a control unit configured to, according to whether the remote maintenance switch is in an ON state or an OFF state, determine whether or not to permit communication for remotely operating the plurality of machine tools by the remote maintenance device, and control connection and disconnection between the remote maintenance device and the plurality of machine tools.

4. The information processing device according to claim 1 or 2,
wherein the information processing device is configured to be connected to a LAN for communicating with the plurality of machine tools.

5. The information processing device according to claim 1, 3 or 4,
wherein communication between the first communication unit and an information service that provides information based on operation information transmitted from the machine tools is communication via a private network,
the information processing device further comprises a transmission unit configured to transmit the operation information of the machine tools to an operation information accumulation server via the private network,
the operation unit includes a data transmission switch configured to switch a state of transmission of the operation information between an ON state and an OFF state, and
the control unit is configured to, when the data transmission switch is in the ON state, permit transmission of the operation information to the operation information accumulation server.

6. The information processing device according to any one of claims 1 to 3,
wherein the remote maintenance switch includes a rotational body and a holding part, and is configured to switch the state between the ON state and the OFF state by an operator holding the holding part and rotating the rotational body.
